# EUROPÄISCHE PATENTSCHRIFT

(11) **EP 1 431 673 B1**
(45) Veröffentlichungstag und Bekanntmachung des Hinweises auf die Patenterteilung: **20.09.2006**
(21) Anmeldenummer: 03450281.5
(22) Anmeldetag: 17.12.2003
(51) Int. Cl.: F24D 3/10, F24H 9/12, F16L 41/03

(54) **Verteiler oder Verteilermodul**
Distributor or module therefor
Distributeur ou module pour celui-ci

(30) Priorität: 17.12.2002 AT 18752002
(43) Veröffentlichungstag der Anmeldung: 23.06.2004
(73) Patentinhaber: Schludermann, Arnold, 9500 Villach (AT); Hafner, Gernot, 9462 Bad St. Leonhard (AT); Geist, Friedrich, 3741 Pulkau (AT)
(72) Erfinder: Schludermann, Arnold, 9500 Villach (AT); Hafner, Gernot, 9462 Bad St. Leonhard (AT); Geist, Friedrich, 3741 Pulkau (AT)
(74) Vertreter: Wildhack, Helmut

(56) Entgegenhaltungen:
- EP-A- 0 612 963
- DE-A- 2 829 216
- DE-A- 3 038 460
- DE-A- 3 043 422
- FR-A- 2 528 530

## Beschreibung

Die Erfindung betrifft einen Verteiler gemäß dem Patentanspruch 9 und ein Verteilermodul gemäß dem Oberbegriff des Patentanspruches 1.

Für Heizanlagen, insbesondere Niedertemperaturheizanlagen sind Verteiler aus Kunststoff oder Metall, z.B. Edelstahl oder Messing, bekannt. Diese bekannten Verteiler (FR 2 528 530 A) sind als System mit zwei Balken, z.B. mit rundem oder rechteckigem Querschnitt, ausgeführt, wobei jeder Balken einen axial verlaufenden Raum aufweist, von dem aus vorzugsweise radial oder senkrecht zur Oberfläche gleich lange Anschlüsse für Heizkreisläufe abzweigen. Einer der Balken wird an eine Heizungsvorlaufleitung angeschlossen, der andere Balken weist einen Anschluss für eine Heizungsrücklaufleitung auf.

Es ist ferner ein Zweikammernverteiler mit koaxial angeordneten Vor- und Rücklauf bekannt (DE 28 29 216 A1), bei dem die Abzweigleitungen für die Vor- und Rückläufe von Heizkreisen versetzt in einer Reihe liegen. Dieser Zweikammernverteiler besitzt jedoch eine beträchtliche Länge von über 1200 mm für 10 Heizkreise und konnte sich aufgrund seiner sperrigen Ausmaße und der teuren Erzeugung auf dem Markt nicht durchsetzen.

Weiters ist aus der gattungsbildenden EP 612 963 A ein Verteileraggregat mit zahlreichen Anschlussstutzen bekannt, die in verschiedene Richtungen weisen bzw. in verschiedenen Ebenen angeordnet sind.

In der DE 30 38 460 A ist ein kombinierter Vorlaufverteiler und Rücklaufsammler mit quer zur Gehäuselängsachse verlaufenden Rohrstutzen beschrieben, der dreiteilig aus zwei Endkappen und einem Mittelstück aufgebaut ist.

Das Problem der großen Länge von Verteilern und damit verbundenen Schwierigkeiten beim Einbau in Gebäuden betrifft natürlich auch besonders die Zwei-Balken-Systeme. Da bei modernen Niedertemperatursystemen zur Heizung und Kühlung von Räumen zur genauen Temperaturregelung die Zahl der Heiz- und Kühlkreisläufe ständig steigt, und in den letzten Jahren vermehrt Kombinationen von Fußboden- und Wandheizungen verwendet werden, die bei optimaler Ausführung ebenfalls mehr Heizkreise erfordern, steigen die mit der großen Baulänge der bekannten Verteiler verbundenen Probleme ständig an. Zudem stellen die Verteiler aufgrund der hohen Zahl an zu versorgenden Heiz- und Kühlkreisläufen einen beträchtlichen Kostenfaktor eines Heiz- oder Kühlsystems dar.

Vor allem soll das Anschließen von Rohrleitungen an den Verteiler aber einfacher werden. Gleich wichtig ist es, die Länge des Verteilers zu reduzieren.

Die vorliegende Erfindung bietet eine Lösung für die genannten Probleme durch Bereitstellung eines Verteilers oder Verteilermoduls mit höchst kompakter Baulänge, der bzw. das darüber hinaus kostengünstig aus Kunststoff hergestellt werden und auf der Baustelle einfach eingebaut werden kann. Diese Aufgabe wird gelöst durch die im Kennzeichen des Anspruches 1 angeführten Merkmale. Durch diese Ausgestaltung des Verteilermoduls bzw. Verteilers wird die leichte Zugänglichkeit des längeren, wandseitigen Anschlusses für den Installateur auf der Baustelle geschaffen, womit es nicht mehr erforderlich ist, die Anschlüsse nebeneinander anzuordnen, wie bei den Verteilern nach dem Stand der Technik. Dies wiederum führt dazu, dass die erfindungsgemäßen Verteiler oder Verteilermodule wesentlich kürzer, wirtschaftlicher und kompakter gebaut werden können als dies bisher möglich war.

Der erfindungsgemäße Verteiler bzw. das erfindungsgemäße Verteilermodul eignet sich besonders für den Einsatz im Gruppenwohnbau, im Siedlungsbau und im Bereich Bauträger bzw. Fertighausindustrie. In diesen Bereichen werden die Vorlauftemperaturen für die Heizsysteme immer weiter reduziert, um den Einsatz von Alternativenergien so effizient wie möglich zu gestalten. Gleichzeitig wird bei der Planung des Wohnraumes, vor allem im Wohn- bzw. Siedlungsbau, auf eine optimale Raumausnutzung sehr großer Wert gelegt. Damit ergeben sich für Heizungsverteiler, die hier zum Einsatz kommen sollen, folgende Anforderungen: größtmögliche Zahl an Heizungsanschlüssen, kleinstmöglicher Platzbedarf, einsetzbar für Heizen und Kühlen, Wärmeisolierung des Heiz- bzw. Kühlmediums. All diese Anforderungen erfüllt der erfindungsgemäße Verteiler bzw. das erfindungsgemäße Verteilermodul.

In einer besonders kurzen Ausgestaltung des erfindungsgemäßen Verteilers oder Verteilermoduls ist der Vorlaufanschluss und der Rücklaufanschluss bezüglich der senkrechten Ebene versetzt, vorzugsweise mit zumindest 50% Überlappung, oder sind Vorlaufanschluss und Rücklaufanschluss einander überdeckend angeordnet. Diese Ausführungsform bietet auch bei geringem Platzbedarf eine sehr gute Zugänglichkeit der Anschlüsse beim Einbau an der Baustelle.

Eine vorteilhafte Ausgestaltung, die einen höchst kompakten Verteiler oder Verteilermodul ergibt, zeichnet sich dadurch aus, dass der Verteiler oder das Verteilermodul ein, vorzugsweise im wesentlichen zylindrisches, Außengehäuse aufweist, in dem ein, vorzugsweise im wesentlichen zylindrisches, Innengehäuse angeordnet ist, wobei eine der beiden Kammern, d.h. entweder die Vorlaufkammer oder die Rücklaufkammer, vom Raum zwischen dem Außengehäuse und dem Innengehäuse und die jeweils andere Kammer vom Innenraum des Innengehäuses gebildet ist. Vorteilhaft mündet dabei ein Anschluss, vorzugsweise der Rücklaufanschluss, in den, insbesondere ringförmigen, Raum zwischen Außengehäuse und Innengehäuse ein. In einer besonders stabilen und platzsparenden Ausgestaltung ist weiters der, insbesondere zylindrische, Innenraum des Innengehäuses über ein den Raum zwischen dem Außengehäuse und dem Innengehäuse dicht durchsetzendes Rohr mit einem Anschluss, vorzugsweise dem Vorlaufanschluss, verbunden. Wenn dabei das Rohr noch einen in das Innengehäuse ragenden Abschnitt aufweist, der in seinem Endbereich mit einem Sperrteil eines Ventils, gegebenenfalls einem Thermostatventil, zusammenwirkt, dessen Gehäuse oder ein dieses Gehäuse aufnehmender Einsatzteil in das Außengehäuse eingesetzt oder eingespritzt ist und den Raum zwischen Außengehäuse und Innengehäuse dicht durchsetzt, indem vorzugsweise der Endbereich des Gehäuses oder Einsatzteiles in das Innengehäuse eingesetzt oder eingespritzt ist, wird dadurch auch eine Abstützung und Lagerung des Innengehäuses an mehrfachen Lagerstellen im Außengehäuse erzielt. Gleichzeitig ist diese Anordnung einfach durch Spritzen bestellbar.

Zur verbesserten Zugänglichkeit ist es vorteilhaft, wenn der Vorlaufanschluss und der Rücklaufanschluss annähernd tangential an das Außengehäuse angeformt und somit voneinander möglichst weit beabstandet sind.

Um Absperr- oder Thermostatventile gut erreichbar anbringen zu können, sollte die Achse des Rohres den Mittelpunkt des Innengehäuses und/oder des Außengehäuses schneiden oder radial zu den beiden Gehäusen verlaufen und vorteilhafterweise in Gebrauchslage des Verteilers bzw. Verteilermoduls vom Innengehäuse zum jeweiligen Anschluss zur Vertikalen geneigt verlaufend angeordnet sein. Gleichzeitig ergeben sich verbesserte Fertigkeitswerte.

Um eine gleichmäßige Strömung des Heiz- oder Kühlmediums im Raum zwischen dem Innengehäuse und dem Außengehäuse des Verteilers oder Verteilermoduls zu erzielen, ist es zweckmäßig, wenn das Innengehäuse und das Außengehäuse zueinander zentrisch angeordnet sind. Zur Wärmeisolierung des Vorlaufes ist es von Vorteil, wenn der Vorlaufanschluss in den Innenraum des Innengehäuses mündet.

Ein in wenigen Arbeitsgängen und billig herstellbarer Verteiler oder Verteilermodul zeichnet sich dadurch aus, dass das Innengehäuse und das Außengehäuse, und gegebenenfalls das Rohr, aus Kunststoff einteilig gespritzt sind. Fertigungstechnisch vorteilhaft ist es weiters, wenn das Ventilgehäuse und/oder die Anschlüsse aus Kunststoff bestehen und bei dem Formen des Verteilers mitgespritzt sind oder von Einsatzstücken aus Metall öder Kunststoff gebildet und um- bzw. eingespritzt sind.

Hohe konstruktive Stabilität und Verwindungssteifheit erzielt man beim erfindungsgemäßen Verteiler oder Verteilermodul, wenn das Innengehäuse und das Außengehäuse durch das bzw. die im innen- und Außengehäuse gelagerten Einsätze für ein Ventilgehäuse und/oder durch das vom Innengehäuse zum Außengehäuse durchgehende Rohr voneinander beabstandet bzw. gegenseitig in Lage gehalten sind. Die Stabilität wird weiter erhöht, wenn der ins Innere des Innengehäuses ragende Abschnitt des Rohres mit Stegen, Flanschen od. dgl. mit der Innenwandung des Innengehäuses verbunden bzw. an dieser abgestützt ist.

Ein besonders bevorzugter erfindungsgemäßer Verteiler ist aus einer Anzahl von nebeneinander angeordneten und miteinander verbundenen erfindungsgemäßen Verteilermodulen zusammengesetzt, die jeweils einen Vorlaufanschluss und einen Rücklaufanschluss aufweisen. Ein einfach zusammenbaubarer und gut dichtender erfindungsgemäßer Verteiler ist aus Verteilermodulen zusammengesetzt, die jeweils im Bereich ihrer jeweiligen Stirnflächen von Außengehäuse und Innengehäuse an das Nachbarmodul angepasste, insbesondere komplementäre bzw. sich ergänzende, als Schweißflansche dienende Vorsprünge und Absätze bzw. Ausnehmungen zum passenden Aneinanderfügen und/oder dichten Zusammenschweißen von zwei Verteilermodulen aufweisen.

Um den erfindungsgemäßen Verteiler an seinen beiden Stirnflächen bzw. die äußersten Verteilermodule dichtend abzuschließen, ist ein zu den Vorsprüngen und Absätzen bzw. Ausnehmungen des Verteilers bzw. Verteilermoduls angepasstes bzw. komplementäre Vorsprünge und Absätze aufweisendes Endmodul, vorzugsweise aus schweißbarem Kunststoff, vorgesehen.

Die Erfindung wird nun unter Bezugnahme auf die Zeichnungen näher erläutert, in denen Fig. 1A einen Abschnitt einer ersten Ausführungsform eines erfindungsgemäßen Verteilers teilweise in Seitenansicht, teilweise im Längsschnitt zeigt, Fig. 1B einen Querschnitt durch ein Verteilermodul zeigt, das beim Verteiler in der ersten Ausführungsform gemäß Fig. 1A verwendet wird, Fig. 2A einen Abschnitt einer zweiten Ausführungsform eines erfindungsgemäßen Verteilers teilweise in Seitenansicht, teilweise schematisch im Längsschnitt zeigt, Fig. 2B einen Querschnitt durch ein Verteilermodul in der zweiten Ausführungsform gemäß Fig. 2A zeigt, Fig. 3A und Fig. 3B ein Anschlussmodul im Längsschnitt bzw. in Vorderansicht zeigen, und Fig. 4A und Fig. 4B ein Endmodul im Längsschnitt bzw. in Vorderansicht zeigen. Fig. 5A zeigt eine Draufsicht und 5B zeigt eine Vordersicht eines Verteilers. Fig. 5C zeigt eine Umrissansicht und Fig. 5D eine Seitenansicht gemäß Fig. 5B.

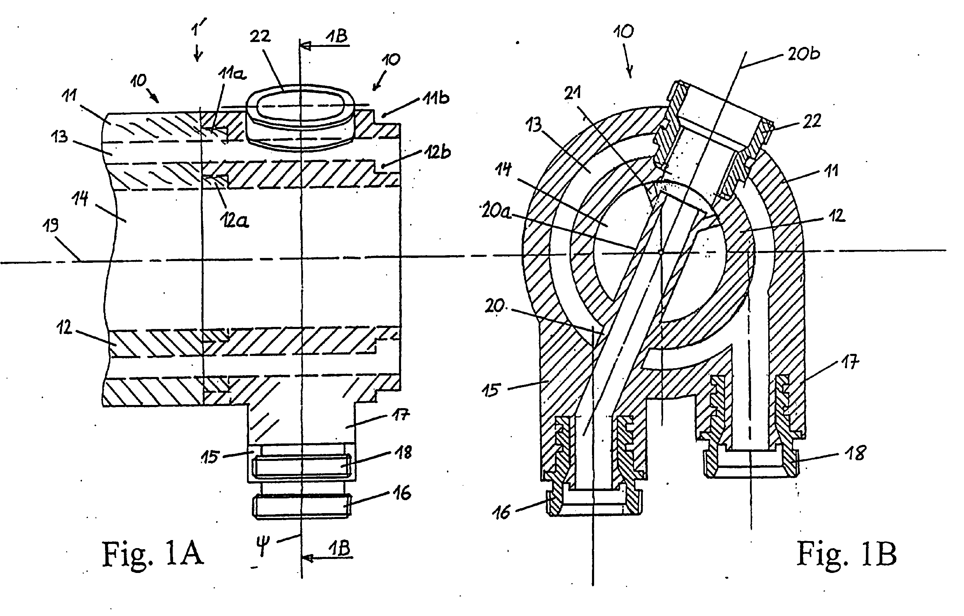

Eine erste Ausführungsform eines erfindungsgemäßen Verteilers 1 ist in Fig. 1A teilweise in Seitenansicht, teilweise im Längsschnitt dargestellt. Man erkennt zwei Verteilermodule 10, wovon eines in Fig. 1B im Querschnitt entlang der Ebene Ψ (bei 1B-1B) von Fig. 1A gezeigt ist. Der Verteiler 1 kann aus einer beliebigen Anzahl von miteinander dicht verbundenen Verteilermodulen 10 zusammengefügt sein. Die einzelnen Verteilermodule bestehen aus spritzbarem und schweißbarem Kunststoff und werden bei der Fertigung durch Induktionsschweißen, Reibschweißen oder elektrisches Schweißen oder getrenntes Erhitzen und Zusammenfügen zu einer Einheit verbunden.

Jedes Verleilermodul 10 besteht aus einem hohlzylindrischen Außengehäuse 11, in dem vorzugsweise koaxial ein hohlzylindrisches Innengehäuse 12 angeordnet ist. Der im Inneren des Innengehäuses definierte zylindrische Raum wird, vorteilhafterweise als Vorlaufkammer 14 ausgebildet. Der zwischen der Außenwand des Innengehäuses 12 und der Innenwand des Außengehäuses 11 definierte ringförmige Raum ist vorteilhafterweise als Rücklaufkammer 13 ausgebildet. Das Verteilermodul 10 umfasst auch einen von einem Anschlussstutzen 15 gebildeten (Vorlauf)-Anschluss, der sich vom Außengehäuse 11 tangential nach unten erstreckt, wobei in den Anschlussstutzen 15 ein Einsatzstück 16 mit Gewinde zum Anschluss einer nicht dargestellten (Vorlauf)-Leitung eines Heiz- oder Kühlkreises eingespritzt ist. Der Anschlussstutzen 15 mündet in ein Rohr 20, das die (Rücklauf)-Kammer 13 dicht durchsetzt und sich mit einem Abschnitt 20a auch durch das Innengehäuse 12 hindurch in die (Vorlauf)-Kammer 14 erstreckt. Das freie, offene Ende des Rohrabschnitts 20a in der (Vorlauf)-Kammer 14 wird von Stegen 21 an der Innenwand des Innengehäuses 12 abgestützt. Ein Ventilsitz 22 für ein Thermostatventil ist in der Verlängerung der Rohrachse 20b liegend durch das Außengehäuse 11 hindurchgehend und in das Innengehäuse 12 ragend eingespritzt. Neben der Funktion der Aufnahme eines Thermostatventils zum Verschließen des Rohres 20 hat der Ventilsitz auch die Aufgabe, das Innengehäuse 12 gegen das Außengehäuse 11 abzustützen und zu lagern. An der gegenüberliegenden Seite des Innengehäuses wird dieselbe Lagerungsfunktion vom Rohr 20 erfüllt, das das Außen- 11 und Innengehäuse 12 miteinander verbindet. Die Längsachse 20b des Rohres 20 schneidet die Längsachse 19 des Verteilers bzw. die Längsachse des Verteilermoduls 10 und verläuft radial und zur Vertikalen geneigt.

Ein weiterer Anschlussstutzen 17 erstreckt sich - dem Anschlussstutzen 15 gegenüberliegend - vom Außengehäuse 11 tangential nach unten und bildet einen (Rücklauf)-Anschluss, der in die (Rücklauf)-Kammer 13 mündet. Ein Einsatzstück 18 mit Gewinde ist in den Anschlussstutzen 17 eingespritzt und dient zum Anschluss einer nicht dargestellten (Rücklauf)-Leitung des erwähnten Heiz- oder Kühlkreises. Im an einer Wand montierten Zustand des Verteilers befindet sich der Vorlauf-Anschlussstutzen 15 näher an der Wand als der Rücklauf-Anschlussstutzen 17. Wesentlich ist, dass der Anschlussstutzen 15 länger ist als der Anschlussstutzen 17. Dadurch ist der Anschlussstutzen 15, obwohl er in einer zur Achse 19 des Verteilers senkrechten Ebene Ψ vom Anschlussstutzen 17 überdeckt wird, dennoch gut zugänglich, da er hinter dem Anschlussstutzen 17 nach unten vorragt. Durch diese Maßnahme ist es möglich, das Verteilermodul 10 extrem kurz und dennoch gut handhabbar zu bauen.

Die gegenüberliegenden End- bzw. Stirnflächen des Verteilermoduls 10 sind zueinander komplementär ausgebildet, indem jede Stirnfläche von Außengehäuse 11 und Innengehäuse 12 abgestuft ausgebildet ist, sodass ringförmige Flansche 11a, 12a an einer Stirnfläche mit ringförmigen Absätzen bzw. Ausnehmungen 11b, 12b an der gegenüberliegenden Stirnfläche bzw. dem benachbarten Verteilermodul zusammenpassen. Die Grenzflächen zwischen den Flanschen und Ausnehmungen werden miteinander in dichtender Beziehung verschweißt, wobei vorzugsweise auf die Flächen eine elektrisch oder induktiv erwärmbare Beschichtung aufgebracht wird, die die Schmelzung des Kunststoffes bewirkt und sich dabei selbst auflöst. Es ist auch möglich, die Grenzflächen anzuwärmen bzw. anzuschmelzen und zusammenzufügen bzw. zusammenzupressen.

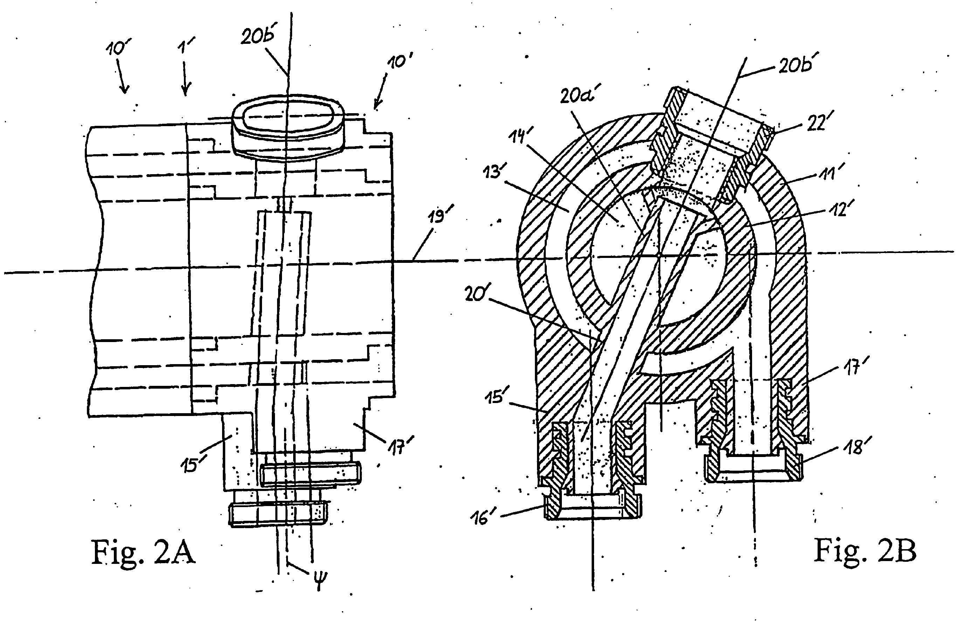

In den Figuren 2A und 2B ist eine weitere Ausführungsform eines Verteiler 1' dargestellt, die aus erfindungsgemäßen Verteilermodulen 10' zusammengesetzt ist. Diese zweite Ausführungsform ist der ersten sehr ähnlich, weshalb allgemein bezüglich der Erläuterung der einzelnen Bauteile auf die obige Beschreibung verwiesen wird und im Folgenden nur die Unterschiede zur ersten Ausführungsform erläutert werden. Aufgrund der Ähnlichkeit der Ausführungen wurden für die Bauteile der zweiten Ausführungsform die Nummerierung der Bezugsziffem der ersten Ausführung, ergänzt um einen Apostroph, beibehalten.

Das Verteilermodul 10' umfasst einen von einem Anschlussstutzen 15' gebildeten Vorlaufanschluss, der sich vom Außengehäuse 11' tangential nach unten erstreckt, wobei in den Anschlussstutzen 15' ein Einsatzstück 16' mit Gewinde zum Anschluss einer Vorlaufleitung eines Heiz- oder Kühlkreises eingespritzt ist. Der Anschlussstutzen 15' mündet in ein Rohr 20', das die Rücklaufkammer 13' dicht durchsetzend sich durch das Innengehäuse 12' hindurch in die Vorlaufkammer 14' erstreckt und einem Ventilsitz 22' für ein Thermostatventil gegenüberliegt. Die Längsachse 20b' des Rohres 20' schneidet die Längsachse 19' des Verteilers bzw. die Längsachse des Verteilermoduls 10' und verläuft sowohl zur Vertikalen geneigt als auch geneigt zu einer Radialebene durch das Verteilermodul 10'.

Ein weiterer Anschlussstutzen 17' erstreckt sich - dem Anschlussstutzen 15' gegenüberliegend - vom Außengehäuse 11' tangential nach unten und bildet einen Rücklaufanschluss, der in die Rücklaufkammer 13' mündet. Ein Einsatzstück 18' mit Gewinde ist in den Anschlussstutzen 17' eingespritzt und dient zum Anschluss einer Rücklaufleitung des erwähnten Heiz- oder Kühlkreises. Der Vorlauf-Anschlussstutzen 15' ist länger als der Rücklauf-Anschlussstutzen 17'.

Weiters sind sowohl der Vorlauf-Anschlussstutzen 15' als auch der Rücklauf-Anschlussstutzen 17' in Bezug auf die Längsachse 19' des Verteilers 1' bzw. zur Längsachse des Verteilermoduls 10' so zueinander versetzt, dass beide von einer sich senkrecht zur Achse des Verteilers oder Verteilermoduls erstreckenden Ebene Ψ geschnitten werden können. Im Gegensatz zur ersten Ausführungsform liegen die beiden Anschlussstutzen 15', 17' - in Richtung der Ebene Ψ gesehen - allerdings nicht einander vollständig überdeckend, sondern der kürzere Rücklauf-Anschlussstutzen 17' überlappt den längeren Vorlauf-Anschlussstutzen 15' zu etwa 70%. Da der nach der Montage des Verteilers hinten bzw. wandnäher gelegene Vorlaufanschlussstutzen 15' länger ist, ist er für den Installateur trotzdem gut zugänglich. Durch diese Maßnahme ist es möglich, das Verteilermodul 10' sehr kurz und dennoch gut handhabbar zu bauen. Es ist möglich, die Überlappung bzw. Überdeckung derart vorzunehmen, dass die Anschlüsse die Ebene Ψ von beiden Seiten her berühren oder die Anschlüsse einander teilweise oder zur Gänze überlappen.

An sich ist es auch möglich, dass das Rohr 20' in der Radialebene verläuft und der Anschluss 17' seitlich zum Rohr 20' versetzt ist, um die Überlappung auszubilden.

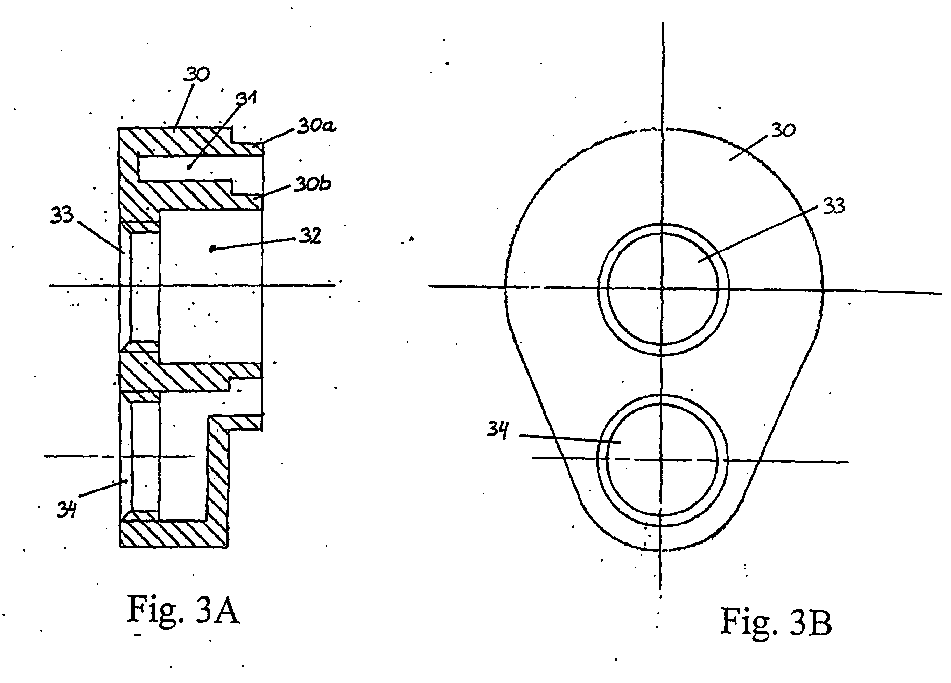

Um den erfindungsgemäßen Verteiler oder ein Modul an einer oder beiden Stirnseiten abzuschließen und seine Vorlaufkammer und Rücklaufkammer an ein Heiz-oder Kühlaggregat anzuschließen, ist ein in Fig. 3A und Fig. 3B im Längsschnitt bzw. in Vorderansicht gezeigtes Anschlussmodul 30 zweckmäßig. Der Körper des Anschlussmoduls 30 weist einen äußeren ringförmigen Raum 31 auf, der mit der ringförmigen Rücklaufkammer 13, 13' der Verteilermodule 10 und 10' zusammenpasst, sowie einen zylindrischen Innenraum 32, der mit der zylindrischen Vorlaufkammer 14, 14' der Verteilermodule 10 und 10' zusammenpasst. In den zylindrischen Innenraum 32 mündet ein mit Gewinde versehener (Vorlauf)-Anschluss 33 für das Heizmedium. In den ringförmigen Raum 31 mündet ein mit Gewinde versehener (Rücklauf)-Anschluss 34 für das Heizmedium. Der Körper des Anschlussmoduls 30 ist weiters mit ringförmigen Flanschen 30a, 30b versehen, die komplementär zu entsprechenden Ausnehmungen an der Stirnseite eines Verteilermoduls gestaltet sind, das mit dem Anschlussmodul 30 dicht abzuschließen ist.

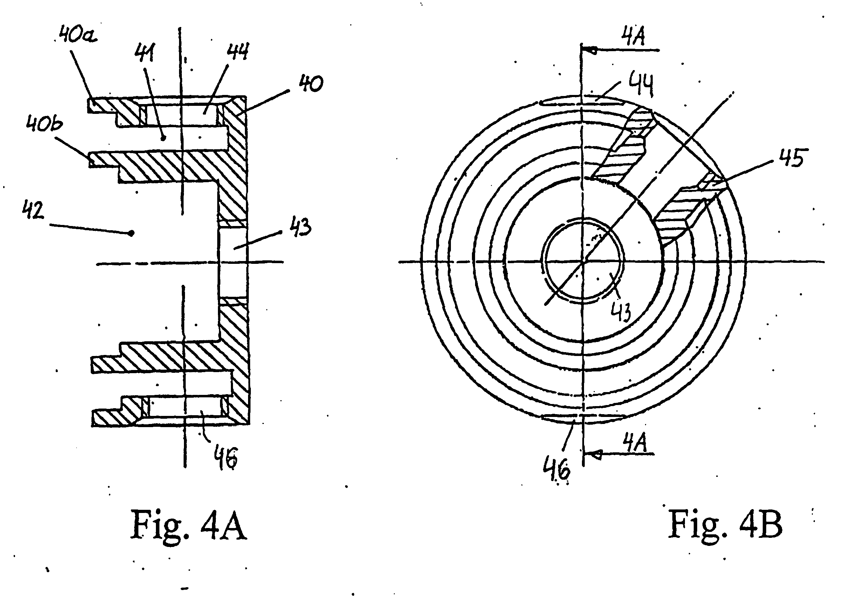

Fig. 4A zeigt ein Endmodul 40 im Längsschnitt gemäß Linie 4A-4A von Fig. 4B und und Fig. 4B zeigt das Endmodul 40 in Vorderansicht und teilweiser Querschnittsansicht. Das Endmodul 40 dient dazu, eine Stirnseite eines Verteilermoduls 10 bzw. 10' dicht abzuschließen. Der Körper des Endmoduls 40 weist einen äußeren ringförmigen Raum 41 auf, der mit der ringförmigen Rücklaufkammer 13, 13' der Verteilermodule 10 und 10' zusammenpasst, sowie einen zylindrischen Innenraum 42, der mit der zylindrischen Vorlaufkammer 14, 14' der Verteilermodule 10 und 10' zusammenpasst. In den zylindrischen Innenraum 42 mündet, insbesondere zentrisch eine Gewindeöffnung 43. In den ringförmigen Raum 41 münden Gewindeöffnungen 44. Der Körper des Endmoduls 40 weist ringförmige Flansche 40a, 40b auf, die komplementär zu entsprechenden Ausnehmungen an der Stirnseite des Verteilermoduls gestaltet sind, welches vom Endmodul 40 dicht abzuschließen ist. Weiters erstreckt sich ein Ventilsitz 45 durch den Körper des Endmoduls in den zylindrischen Innenraum 42.

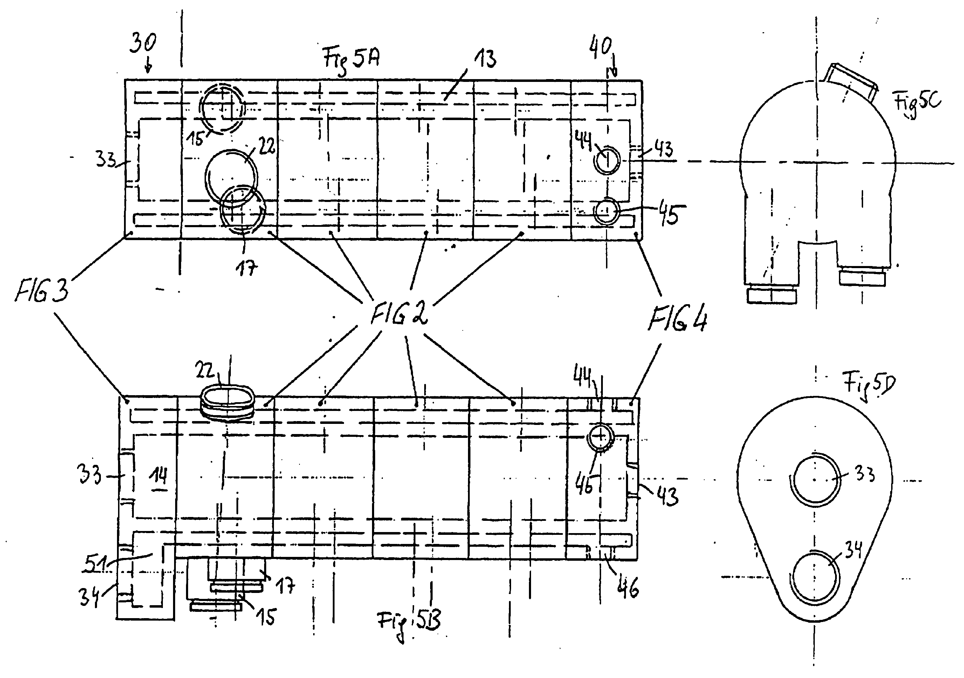

In den Fig.5A und 5B ist ein Endmodul 40 an eine Anzahl von miteinander verbundenen Verteilern angeschlossen bzw. mit diesen verbunden, der in seiner Stirnfläche eine insbesondere zentral gelegene, vorzugsweise mit einem Gewinde versehene Anschlussöffnung 43 aufweist, um einen Entleerungsanschluss auszubilden oder um den Verteiler an einen anderen Verteiler anschließen zu können.

Des weiteren ist ein in den Innenraum 42 des Endmoduls 40 mündender Entlüftungsanschluss 45 dargestellt.

In den Ringraum 41 des Endmoduls 40 mündet oben ein Entlüftungsanschluss 44 und unten ein Entleerungsanschluss 46.

## Patentansprüche

1. Verteilermodul (10,10') für Niedertemperaturheizanlagen oder für Kühlanlagen
- mit einer Vorlaufkammer (14) mit einem in die Vorfaufkammer (14) mündenden Vorlaufanschlussstutzen (15, 15') zum Anschluss an einen Heiz- oder Kühlkreis und einer Rücklaufkammer (13) mit einem Rücklaufanschlussstutzen (17, 17') zum Anschluss an den Heiz-oder Kühlkreis,
- wobei das Verteilermodul (10,10') ein, vorzugsweise im wesentlichen zylindrisches, Außengehäuse (11, 11') aufweist, in dem ein, vorzugsweise im wesentlichen zylindrisches, Innengehäuse (12, 12') angeordnet ist,
- wobei eine der beiden Kammern, d.h. entweder die Vorlaufkammer (14) oder die Rücklaufkammer (13), vom, insbesondere ringförmigen, Raum (13, 13') zwischen dem Außengehäuse (11,11') und dem Innengehäuse (12, 12') und die jeweils andere Kammer vom, insbesondere zylindrischen, Innenraum (14, 14') des Innengehäuses (12, 12') gebildet ist,
- wobei einer der beiden Anschlussstutzen (15, 17), vorzugsweise der Rücklaufanschlussstutzen (17, 17'), in den Raum (13,13') einmündet,
- wobei der Innenraum (14, 14') über ein den Raum (13, 13') dicht durchsetzendes Rohr (20, 20') mit dem jeweils anderen Anschlussstutzen, vorzugsweise dem Vortaufanschlussstutzen (15, 15'), verbunden ist,
- und wobei der Vorlaufanschlussstutzen (15, 15') und der Rücklaufanschlussstutzen (17, 17') von einer sich senkrecht zur Achse des Verteilermoduls (10,10') erstreckenden Ebene (Ψ), vorzugsweise im Bereich der Längsachse des jeweiligen Anschlussstutzens, geschnitten werden oder diese Ebene (Ψ) berühren.
**dadurch gekennzeichnet, dass**
- ein einziger Vorlaufanschlussstutzen (15,15') und ein einziger Rücklaufanschlusstutzen (17, 17') vorgesehen sind,
- und dass einer der beiden Anschlussstutzen, d.h. der Vorlaufanschlussstutzen (15, 15') oder der Rücklaufanschlussstutzen (17, 17'), vorzugsweise der Anschlussstutzen in dem im Gebrauch wandnahen Bereich des Verteilermoduls (10,10'), länger ausgebildet ist bzw. weiter vom Verteileimodul (10,10') absteht als der jeweils andere Anschlussstutzen.

2. Verteilermodul nach Anspruch 1, **dadurch gekennzeichnet, dass** der Vorlaufanschlussstutzen (15, 15') und der Rücklaufanschlussstutzen (17, 17') bezüglich der senkrechten Ebene (Ψ) versetzt, vorzugsweise mit zumindest 50% Überlappung, oder einander überdeckend angeordnet sind.

3. Verteilermodul nach Anspruch 1 oder 2, **dadurch gekennzeichnet, dass** der vorlaufanschlussstutzen (15, 15') und der Rücklaufanschlussstutzen (17, 17') annähernd tangential an das Außengehäuse (11, 11') angeformt sind und, insbesondere achsparallel zueinander, in Gebrauchsstellung nach unten gerichtet sind.

4. Verteilermodul nach einem der Ansprüche 1 bis 3, **dadurch gekennzeichnet, dass** das Rohr (20, 20') einen in das Innengehäuse (12, 12') ragenden Abschnitt (20a, 20a') aufweist, der in seinem Endbereich mit einem Sperrteil eines Ventils, gegebenenfalls einem Thermostatventil, zusammenwirkt, wobei dessen Gehäuse oder ein dieses Gehäuse aufnehmender Einsatzteil (22, 22') in das Außengehäuse (11, 11') eingesetzt oder eingespritzt ist und den Raum (13, 13') zwischen Außengehäuse und Innengehäuse dicht durchsetzt, indem vorzugsweise der Endbereich des Gehäuses oder Einsatzteiles (22, 22') in das innengehäuse (12, 12') eingesetzt oder eingespritzt ist, und/oder dass die Achse (20b, 20b') des Rohres (20, 20') den Mittelpunkt des innengehäuses (12, 12') und/oder des Außengehäuses (11, 11') schneidet oder radial zu den beiden Gehäusen verläuft und vorteilhafter Weise in Gebrauchslage des Verteilermoduls (10,10') vom Innengehäuse zum jewelligen Anschluss zur Vertikalen geneigt verlaufend angeordnet ist.

5. Verteilermodul nach einem der Ansprüche 1 bis 4, **dadurch gekennzeichnet, dass** das Innengehäuse (12, 12') und das Außengehäuse (11, 11') zueinander zentrisch bzw. koaxialangeordnet sind und/oder dass das Innengehäuse (12, 12') und das Außengehäuse (11, 11'), und gegebenenfalls das Rohr (20, 20'), aus Kunststoff einteilig gespritzt sind.

6. Verteilermodul nach einem der Ansprüche 1 bis 5, **dadurch gekennzeichnet, dass** das Ventilgehäuse und/oder die Anschlüsse aus Kunststoff bestehen und bei dem Formen des Verteilermoduls mitgespritzt sind oder von Einsatzstücken (16, 18, 22; 16', 18', 22') aus Metall oder Kunststoff gebildet und um- bzw. eingespritzt sind, und/oder dass das Innengehäuse (12, 12') und das Außengehäuse (11, 11') durch die im innen- und Außengehäuse gelagerten Einsätze (22, 22') für ein Ventilgehäuse und/oder durch das vom Innengehäuse zum Außengehäuse durchgehende Rohr (20, 20') voneinander beabstandet bzw. gegenseitig in Lage gehalten sind und/oder dass der ins Innere des Innengehäuses ragende Abschnitt (20a) des Rohres (20) mit Stegen (21), Flanschen od. dgl. mit der Innenwandung des Innengehäuses verbunden bzw. an dieser abgestützt ist.

7. Verteilermodul nach einem der Ansprüche 1 bis 6, **dadurch gekennzeichnet, dass** der (Ring)Raum (13) des Anschlussmoduls (30) mit einer seitlich und nach unten bzw. radial anschließenden Kammer (51) vergrößert bzw. verlängert ist, in die der vorzugsweise parallel zum (Ring)Raum (13) ausgenchtete (Rücklauf) Anschluss (34) einmündet und/oder dass In den Innenraum (42) des Endmoduls (40) an seiner Stirnfläche ein Spül- oder Leitungsanschluss (43) im wesentlichen in zentraler Lage und/oder zumindest ein Entlüftungsanschtuss (45) einmündet und/oder dass in den Ringraum (41) des Endmoduls (40) ein nach oben abgehender Entlüftungsanschluss (44) und/oder ein nach unten abgehender Entleerungsanschluss (46) einmündet.

8. Verteilermodul nach einem der Ansprüche 1 bis 7, **dadurch gekennzeichnet, dass** der Vorlaufanschlussstutzen (15,15') länger ausgebildet ist als der Rücklaufanschlussstutzen (17,17').

9. Verteiler zusammengesetzt aus einem verteilermodul (10,10') gemäß einem der Ansprüche 1 bis 8 oder aus einer Anzahl von nebeneinander angeordneten und miteinander verbundenen Verteilermodulen (10, 10') gemäß einem der Ansprüche 1 bis 8, wobei im Bereich jeder Stirnfläche eines Vorteilermoduls (10,10') die Stirnflächen bzw. -bereiche das Außengehäuses und des Innengehäuses aneinander angepasste, insbesondere komplementäre bzw, sich ergänzende, als Schweißflansche dienende Vorsprünge (11a, 12a) und Absätze bzw. Ausnehmungen (11b, 12b) zum passenden Aneinanderfügen und/oder dichten Zusammenschweißen von zwei nebeneinander anzuordnenden Verteilermodulen aufweisen, wobei gegebenenfalls zum Abdichten der Stirnflächen eines Verteilers oder Vorteileimoduls jeweils ein zu den Vorsprüngen und Absätzen bzw. Ausnehmungen des Verteilers bzw. Verteilemoduls angepasstes bzw. komplementäre Vorsprünge und Absätze aufweisendes Endmodul (40) und Anschlussmodul (30), vorzugsweise aus schweißbarern Kunststoff, vorgesehen sind.

## Claims

1. Distribution module (10, 10') for low temperature heating installations or for cooling installations,
- comprising a supply chamber (14) which includes a supply connection piece (15, 15'), that orifices into said supply chamber (14), for connection to a heating or cooling circulation, and a reflux chamber (13) having a reflux connection piece (17, 17') for connection to said heating or cooling circulation,
- wherein said distribution module (10, 10') comprises a, preferably substantially cylindrical, outer housing (11, 11') in which a, preferably substantially cylindrical, inner housing (12, 12') is located,
- one of said two chambers, i.e. either said supply chamber (14) or said reflux chamber (13), being formed by the, particularly annular, space (13, 13') between said outer housing (11, 11') and said inner housing (12, 12'), while the respective other chamber is formed by the, particularly cylindrical, inner space (14, 14') of said inner housing (12, 12'),
- one of the two connection pieces (15, 17), preferably said reflux connection piece (17, 17'), discharging into said space (13, 13'),
- wherein said inner space (14, 14') is communicating with the respective other connection piece, preferably said supply connection piece (15, 15'), via a pipe (20, 20') which passes tightly through said space (13, 13'),
- and wherein said supply connection piece (15, 15') and said reflux connection piece (17, 17') are intersected by or touch a plane (Ψ) that extends perpendicularly to the axis of the distribution module (10, 10'), preferably in the region of the longitudinal axis of the respective connection piece,
**characterised in that**
- a single supply connection piece (15, 15') and a single reflux connection piece (17, 17') are provided,
- and that one of the two connection pieces, i.e. either the supply connection piece (15, 15') or the reflux connection piece (17, 17'), preferably that connection piece which, in use, is situated in the region near the wall of the distribution module (10, 10'), is longer or projects further from the distribution module (10, 10') than the respective other connection piece.

2. Distribution module according to claim 1, **characterised in that** said supply connection piece (15, 15') and said reflux connection piece (17, 17') are offset with respect to said perpendicular plane (Ψ), preferably with an overlap of at least 50%, or covering each other.

3. Distribution module according to claim 1 or 2, **characterised in that** said supply connection piece (15, 15') and said reflux connection piece (17, 17') are formed approximately tangentially to said outer housing (11, 11') and, in position of use, are downwards oriented, particularly being axially parallel to each other.

4. Distribution module according to any of claims 1 to 3, **characterised in that** said pipe (20, 20') comprises a portion (20a, 20a') which projects into said inner housing (12, 12') and whose end region co-operates with the locking part of a valve, optionally a thermostatic valve, the housing of which or an insert part (22, 22') receiving this housing being inserted or injection moulded into said outer housing (11, 11'), thus passing tightly through the space (13, 13') between said outer housing and said inner housing, wherein preferably the end region of the housing or insert part (22, 22') is inserted or injection moulded into said inner housing (12, 12'), and/or that the axis (20b, 20b') of the pipe (20, 20') intersects the centre of the inner housing (12, 12') and/or of the outer housing (11, 11') or extends in radial direction to the two housings, and, in the position of use of the distribution module (10, 10'), is advantageously arranged so as to extend in an inclined manner to the vertical from the inner housing to the respective connection piece.

5. Distribution module according to any of claims 1 to 4, **characterised in that** said inner housing (12, 12') and said outer housing (11, 11') are arranged in a centred way to one another or coaxially and/or that the inner housing (12, 12') and the outer housing (11, 11'), and optionally the pipe (20, 20'), are integrally injection moulded from plastic material.

6. Distribution module according to any of claims 1 to 5, **characterised in that** said valve housing and/or the connections consist of plastic material and are injection moulded together when forming the distribution module, or are formed by insertion pieces (16, 18, 22; 16', 18', 22') of metal or a plastic material and are injection moulded around or in, and/or that the inner housing (12, 12') and the outer housing (11, 11') are spaced from one another or positioned relative to each other by the inserts (22, 22') for a valve housing, situated within the inner housing and the outer housing and/or by the pipe (20, 20') which passes from the inner housing to the outer housing, and/or that the portion (20a) of the pipe (20), which projects into the interior of the inner housing, is connected to and props against the inner wall of the inner housing by cross-pieces (21), flanges or the like.

7. Distribution module according to any of claims 1 to 6, **characterised in that** said (annular) space (13) of the connection module (30) is enlarged or prolonged by a laterally and downwards or radially joining chamber (51), into which the (reflux) connection (34), preferably oriented parallel to the (annular) space (13), discharges and/or that a flushing or conduit connection (43) and/or at least one venting connection (45) discharges into the inner space (42) of the end module (40) at its front surface in a substantially central position, and/or that an upwards extending venting connection (44) and/or a downwards extending discharge connection (46) discharges into the annular space (41) of the end module (40).

8. Distribution module according to any of claims 1 to 7, **characterised in that** said supply connection piece (15, 15') is longer than said reflux connection piece (17, 17').

9. Distributor composed of a distribution module (10, 10') according to any of claims 1 to 8, or of a number of distribution modules arranged side by side and interconnected to one another according to any of claims 1 to 8, wherein the front surfaces or front regions of the outer housing and the inner housing are formed in the region of each front surface of a distribution module (10, 10') with projections (11a, 12a) and shoulders or recesses (11b, 12b) fitting each other, and particularly being complementary or supplementary, to serve as welding flanges for fittingly joining and/or tightly welding two distribution modules together to be arranged side by side, wherein a respective end module (40) or connection module (30), preferably of weldable plastic material, is optionally provided for sealing the front surfaces of a distributor or distribution module and has projections and shoulders adapted or complementary to the projections, shoulders or recesses of the distributor or distribution module.

## Revendications

1. Module de distribution (10, 10') pour des installations de chauffage à basse température ou pour des installations réfrigérantes
- comprenant une chambre d'alimentation (14) y inclus un tuyau d'alimentation (15, 15') débouchant dans la chambre d'alimentation (14) pour la connexion à une circulation de chauffage ou de réfrigération, et une chambre de reflux (13) ayant un tuyau de reflux (17, 17') pour la connexion à ladite circulation de chauffage ou de réfrigération,
- le module de distribution (10, 10') comprenant un boîtier extérieur (11, 11'), de préférence essentiellement cylindrique, dans lequel un boîtier intérieur (12, 12'), de préférence essentiellement cylindrique, est disposé,
- une des deux chambres, ça veut dire soit la chambre d'alimentation (14) soit la chambre de reflux (13), étant formée par un espace (13, 13'), particulièrement annulaire, entre le boîtier extérieur (11, 11') et le boîtier intérieur (12, 12'), tandis que l'autre chambre respective est formée par l'espace intérieur (14, 14'), particulièrement cylindrique, du boîtier intérieur (12, 12'),
- dans lequel un des deux tuyaux (15, 17), de préférence le tuyau de reflux (17, 17'), débouche dans ledit espace (13, 13'),
- dans lequel l'espace intérieur (14, 14') communique avec l'autre tuyau respectif, préférablement le tuyau d'alimentation (15, 15'), par un conduit (20, 20'), qui passe d'une manière étanche à travers de l'espace (13, 13'),
- et dans lequel le tuyau d'alimentation (15, 15') et le tuyau de reflux (17, 17') sont coupés par ou touchent un plan (Ψ), qui s'étend perpendiculairement à l'axe du module de distribution (10, 10'), de préférence dans la zone de l'axe longitudinal du tuyau respectif, ,
**caractérisé en ce, qu'**
- un seul tuyau d'alimentation (15, 15') et un seul tuyau de reflux (17, 17') sont prévus,
- et que l'un des deux tuyaux, ça veut dire le tuyau d'alimentation (15, 15') ou le tuyau de reflux (17, 17'), de préférence le tuyau d'alimentation, dans une zone du module de distribution (10, 10'), qui, en usage, est proche à la paroi, est formé d'une manière plus longue et ressaute plus loin du module de distribution (10, 10') que l'autre tuyau respectif.

2. Module de distribution selon la revendication 1, **caractérisé en ce que** le tuyau d'alimentation (15, 15') et le tuyau de reflux (17, 17') sont disposés d'une manière décalée par rapport au plan perpendiculaire (Ψ), préférablement avec un recouvrement d'au moins 50% ou en recouvrant l'un l'autre.

3. Module de distribution selon la revendication 1 ou 2, **caractérisé en ce que** le tuyau d'alimentation (15, 15') et le tuyau de reflux (17, 17') sont formés d'une façon intégrale approximativement tangentiellement au boîtier extérieur (11, 11') et, en position d'usage, sont dirigés en bas, particulièrement l'un à l'autre d'une façon parallèle à l'axe.

4. Module de distribution selon une quelconque des revendications 1 à 3, **caractérisé en ce que** le conduit (20, 20') comprend un morceau (20a, 20a'), qui ressaute dans le boîtier intérieur (12, 12'), et qui, dans sa zone terminale, coopère avec une partie d'arrêt d'un soupape, le cas échéant d'un soupape thermostatique, dont le boîtier ou un insert (22, 22'), qui reçoit ce boîtier, est enfoncé ou coulé dans le boîtier extérieur (11, 11') et passe l'espace (13, 13') entre le boîtier extérieur et le boîtier intérieur d'une manière étanche, par le fait que la zone terminale du boîtier ou insert (22, 22') est préférablement inséré ou coulé dans le boîtier intérieur (12, 12'), et/ou que l'axe (20b, 20b') du conduit (20, 20') coupe le centre du boîtier intérieur (12, 12') et/ou du boîtier extérieur (11, 11 ') ou s'étend radialement aux deux boîtiers, et en étant disposé d'une manière avantageuse, en position d'usage du module de distribution (10, 10'), d'une façon inclinée à la verticale en partant du boîtier intérieur jusqu'à la connexion respective.

5. Module de distribution selon une quelconque des revendications 1 à 4, **caractérisé en ce que** le boîtier intérieur (12. 12') et le boîtier extérieur (11, 11') sont disposés d'une façon centrée l'un par rapport à l'autre ou coaxialement, et/ou que le boîtier intérieur (12, 12') et le boîtier extérieur (11, 11'), et le cas échéant le conduit (20, 20'), sont coulés d'une manière intégrale d'une matière plastique.

6. Module de distribution selon une quelconque des revendications 1 à 5, **caractérisé en ce que** le boîtier de soupape et/ou les connexions consistent d'une matière plastique et sont coulés ensemble lors du moulage du module de distribution, ou sont formés d'un métal ou d'une matière plastique et sont encastrés par injection, et/ou que le boîtier intérieur (12, 12') et le boîtier extérieur (11, 11') sont espacés et maintenus en position relativement l'un à l'autre par les inserts (22, 22') pour un boîtier de soupape situés dans le boîtier intérieur et extérieur et/ou par le conduit (20, 20'), qui passe du boîtier intérieur au boîtier extérieur, et/ou que le morceau (20a) du conduit (20), qui ressaute dans l'intérieur du boîtier intérieur, est relié à la paroi intérieur du boîtier intérieur et est appuyé à celle-ci.

7. Module de distribution selon une quelconque des revendications 1 à 6, **caractérisé en ce que** l'espace (annulaire) (13) du module de connexion (30) est agrandi ou rallongé par une chambre (51), qui s'attache latéralement et vers le bas ou radialement, et dans laquelle débouche la connexion (de reflux) (34), préférablement orientée parallèlement à l'espace (annulaire) (13), et/ou qu'une connexion de rinçage ou de conduite (43) et/ou au moins une connexion d'élimination de l'air (45) débouche(nt) dans l'espace intérieur (42) du module terminale (40) à sa surface frontale dans une position essentiellement centrale et/ou qu'une connexion d'élimination de l'air (44), partant en haut, et/ou une connexion d'évacuation (46), partant vers le bas, débouche(nt) dans l'espace annulaire (41) du module terminale (40).

8. Module de distribution selon une quelconque des revendications 1 à 7, **caractérisé en ce que** le tuyau d'alimentation (15, 15') est plus longue que le tuyau de reflux (17, 17').

9. Distributeur composé d'un module de distribution (10, 10') selon une quelconque des revendications 1 à 8, ou d'un nombre des modules de distribution (10, 10') disposé l'un à côté de l'autre et reliés l'un à l'autre selon une quelconque des revendications 1 à 8, dans lequel les surfaces frontales ou zones frontales du boîtier extérieur et du boîtier intérieur sont formés dans la zone de chaque surface frontale d'un module de distribution (10, 10') avec des parties en saillie (11a, 12a) et des gradins ou des creux (11b, 12b) pour relier, d'une façon adaptée, et/ou pour souder d'une manière étanche deux modules de distribution disposés l'un à côté de l'autre, qui sont adaptés l'un à l'autre, particulièrement d'une façon complémentaire ou supplémentaire, et qui servent comme flasques à souder, un module terminal (40) et un module de raccord (30) respectifs, de préférence d'une matière plastique soudable, étant prévus, le cas échéant, avec des parties en saillie et des gradins, qui sont adaptés ou complémentaires aux parties en saillie et aux gradins ou creux du distributeur ou module de distribution pour étancher des surfaces frontales d'un distributeur ou module de distribution.
